# EUROPEAN PATENT APPLICATION

(11) **EP 2 071 440 A1**
(43) Date of publication of application: **17.06.2009**
(21) Application number: 07123260.7
(22) Date of filing: 14.12.2007
(51) Int. Cl.: G06F 3/048

(54) **Dynamic repositioning of a drop down page/window**

(71) Applicant: SIEMENS AKTIENGESELLSCHAFT, 80333 München (DE)
(72) Inventor: Ramanathan, Kishore, 560034 Bangalore (IN)

(57) **Abstract**

A system (22) and method for providing a graphical user interface is described herein. The proposed system (22) comprises means for generating a parent window (24) containing a drop-down control (27). The proposed system (22) also includes means for displaying a drop-down page window (45) associated with said drop-down control (27) at a first location (44) in said parent window (24) in response to a first user input. In accordance with the present invention, the proposed system (22) further comprises means for repositioning said drop-down page window (45) to a second location (46) in said parent window (24) in response to a second user input.

## Description

The present invention relates to graphical user interfaces,

Graphical user interfaces are typically based on graphic display technology that employs pictorial representations, typographic-styled text and other graphical representations on a display screen of a computer system. A graphical user interface (GUI) includes a window environment that configures the screen to resemble a graphical display for a user to enter or view information. A GUI control is a unit of a graphical user interface used to input or output data from the application to the end user of the application. Examples of GUI controls typically include text boxes, drop-down lists, combo-boxes and list boxes. Other examples include picture controls, radio buttons and check boxes, among others.

Normally, in the context of controls contained within a window, it is observed that when a drop-down control is placed inside a window and when the drop-down control is clicked, a drop-down page window opens and is displayed beside the drop-down control. The position of the drop-down page window is decided dynamically based on the placement of the drop-down control, considering the width and height limits of the display unit.

There could be situations wherein the widget/control selection within the drop-down page will be based on the state of controls outside the drop-down control. But this might not be visible to the user when the drop-down page window is opened as it might hide other controls underneath. Hence, if a user had to make click within a drop-down page window based on the states of some other controls that lie under the drop-down page window, then the user would actually need to close the drop-down page window and check the dependency control state and then open the drop down-page window once again. This could be a substantial limitation for the user to make choices within a screen. The user might be forced to perform a few more clicks to carry out a particular function using the GUI system.

The object of the present invention is to provide an improved graphical user interface.

The above object is achieved by a system for providing a graphical user interface, comprising:
- means for generating a parent window containing a drop-down control,
- means for displaying a drop-down page window associated with said drop-down control at a first location in said parent window in response to a first user input, and
- means for repositioning said drop-down page window to a second location in said parent window in response to a second user input.

The above object is achieved by a method for providing a graphical user interface, comprising:
- generating a parent window comprising a drop- down control,
- displaying a drop-down page window associated with said drop-down control at a first location in said parent window upon selection of said drop-down control by a first user input, and
- repositioning said drop-down page window to a second location in the parent window in response to a second user input.

The underlying idea of the present invention is to improve existing GUI controls so as to allow the user an option to reposition a drop-down page window which is displayed upon activation of the associated drop-down control, such that other widgets/controls necessary for a given operation, that would otherwise be hidden by the drop-down page window, would be now visible. This ensures that that user does not have to make extra mouse-clicks to make choices within a screen.

In one embodiment, the proposed system comprises means for storing coordinates of the second location of said drop-down page window in a persistent storage location accessible to an application program to which said parent window belongs. This feature ensures that the new position of the drop-down page window is retained and that the drop-down page window is displayed in the same location the next time a user clicks to activate the drop-down control. The persistent storage location may include any external file to the application.

In a preferred embodiment, the drop-down page window comprises a client area, wherein the second user input comprises selecting a portion of the client area and dragging said drop-down page window to the second location. The above feature provides a simplified user interface for repositioning the drop-down page window.

In an exemplary embodiment, the means for repositioning the drop-down page window further comprises:
- means for trapping a first window message by a window procedure of the drop-down page window, said first window message being generated for notification of a mouse-click on a client area of the drop-down page window,
- means for trapping a second window message by the window procedure of the drop-down page window, said second window message being generated for notification of a mouse-movement subsequent to said mouse-click,
- means for trapping a third window message generated for notification of a mouse-release and noting the coordinates of the point where said mouse-release occurs, and
- means for communicating said coordinates to the window procedure of the drop-down page window and displaying the drop-down page window at the second location, said second location being defined by said coordinates.
   The above feature is particularly advantageous in case of GUIs having input means such as mouse, or touch-screen or a stylus, allowing a user to reposition a drop-down page window to a new location by simply dragging the drop-down page window to the desired location using a mouse, a touch-screen or a stylus.

The present invention is further described hereinafter with reference to illustrated embodiments shown in the accompanying drawings, in which:
FIG 1 is a schematic diagram illustrating an exemplary GUI including drop-down controls,
FIG 2 is a schematic diagram showing a drop-down page window for a drop-down control positioned in a central location of the display area,
FIG 3 is a schematic diagram showing a drop-down page window for a drop-down control positioned in a corner location of the display area,
FIG 4 illustrates a parent window having a drop-down control,
FIG 5 illustrates a drop-down page window generated upon activation of the drop-down control in response to a first user input,
FIG 6 illustrates the drop-down page window of FIG 3 that repositioned to a second location in response to a second user input, and
FIG 7 is a flowchart illustrating an exemplary method for repositioning a drop-down page window in accordance with an exemplary embodiment of the present invention.

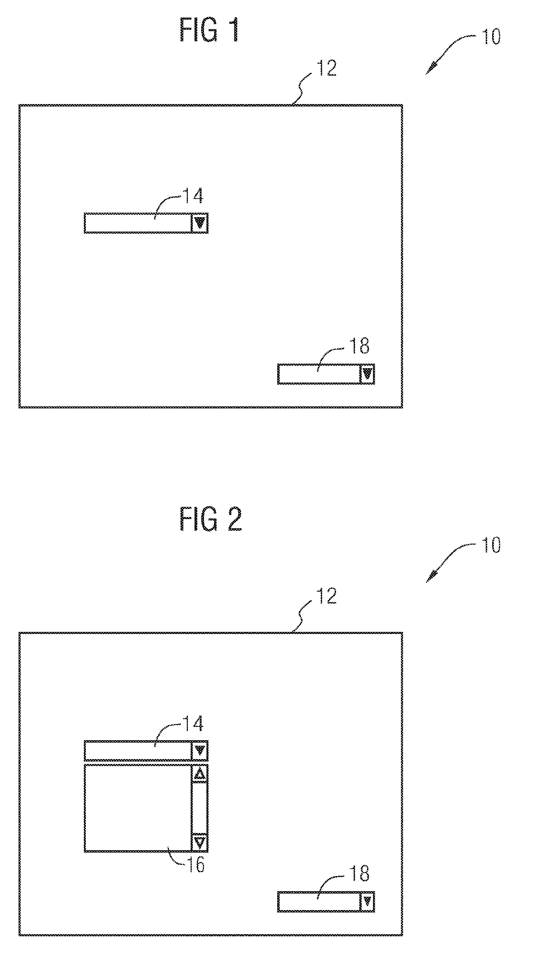

Referring now to FIG 1, an example of a conventional GUI system 10 is illustrated having a window 12 containing multiple child controls 14 and 18. The child controls 14 and 18 shown herein are drop-down controls. As known to one skilled in the art, a drop-down control is a GUI element that allows a user to choose one value from a list. When a drop-down control is inactive it displays a single value. When activated it displays a drop-down page window containing a list of values, from which the user may select one. When the user selects a new value the drop-down control reverts to its inactive state, displaying the selected value. For the purpose of this discussion, the term 'drop-down control' refers to both editable and un-editable drop-down controls. An un-editable drop-down control is essentially a drop-down list, wherein the entry portion cannot be edited by a user. An editable drop-down control, also referred to as a combo-box is a combination of a drop-down list and a text-box, allowing the user either to type a value directly into the control or choose from the list of existing options. An example of a combo-box is an address bar of graphical web browsers.

When the drop-down control 14 is activated by a user input, for example, by a mouse-click, an associated drop-down page window 16 is opened as shown in FIG 2. Herein, since the illustrated drop down-control 14 is positioned in a central location of the display area, the drop-down page window 16 is displayed below the drop-down control 14.

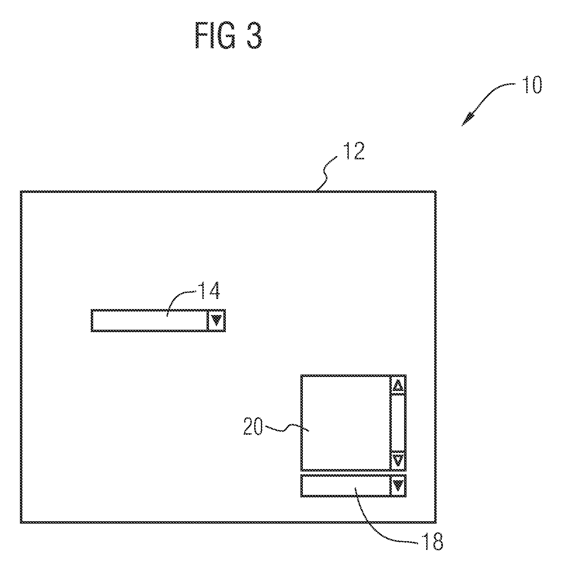

However, as can be seen, the drop-down control 18 is placed at a bottom-right hand corner location of the display area. Hence, when this drop-down control 18 is activated by a user input, an associated drop-down page window 20 is displayed above the drop-down control 18, as illustrated in FIG 3.

From the above examples, it can be seen that in a conventional GUI, the position of a drop-down page window is not at the user's discretion but is determined based on the position of the drop-down control, further based upon the width and height limits of the display area. As discussed, if a user had to make click within a drop-down page window based on the states of some other controls that lie under the drop-down page window, then the user would actually need to close the drop-down page window and check the dependency control state and then open the drop down-page window once again. This could be a substantial limitation for the user to make choices within a screen. This limitation is overcome by the present invention which gives the user an option to reposition the drop-down page window at runtime.

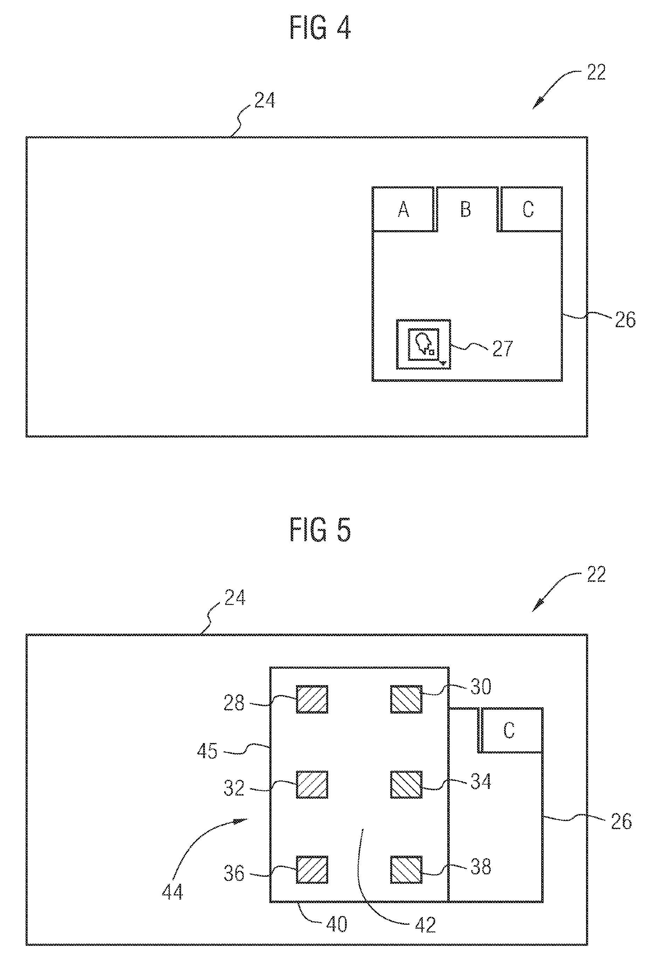

FIG 4 shows a system 22 for providing a GUI in accordance with an embodiment of the present invention. The GUI is provided by an application having a parent window 24 that has child control 26 containing a drop-down control 27. In the shown example, the drop-down control 27 is an un-editable drop-down control, but it will be appreciated that the underlying principle may be extended to an editable drop-down control or a combo box. Input means for the GUI may comprise a mouse or stylus or may even comprise a touch-screen. The drop-down control 27 may be activated by a user input typically comprising a click of the mouse, the press of a stylus, or the tap of the touch-screen with a finger.

Upon activation of the drop-down control 27, an associated drop-down page window 45 is displayed at an initial location 44, as shown in FIG 5. The illustrated drop-down page window 45 further includes a plurality of push-button controls 28, 30, 32, 34, 36, 38 as designated by shaded regions in the drop-down page window 45. The drop-down page window 45 also includes a client area 42 as designated by the un-shaded portion in the drop-down page window 45. The coordinates of the initial location 44 of the drop-down page window 45 may be read from an external configuration file by the application during start-up and stored. The external configuration file that contains the coordinates of the drop-down page window 45 may be any persistent storage location such as an xml file, registries, etc. that are external to the application.

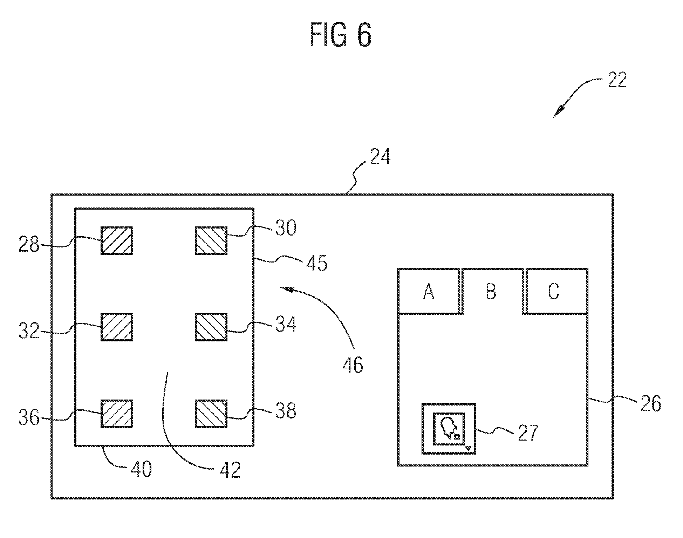

As shown in FIG 6, the present invention allows the user to reposition the drop-down page window 45 to a new location 46 of the user's choice. If the input means is a mouse, the repositioning may be carried out by clicking on a mouse button on any portion of the client area 42 and dragging the drop-down page window 45 to the new location 42 of the user's choice and releasing the mouse button. Likewise, when the input means is a stylus, the user may press the stylus on any portion of the client area 42 and drag the drop-down page window 45 to the new location 42 of the user's choice and release the stylus. In case of a touch-screen, the user may tap on any portion of the client area 42 and drag the drop-down page window 45 to the new location 42 of the user's choice and release the touch-screen.

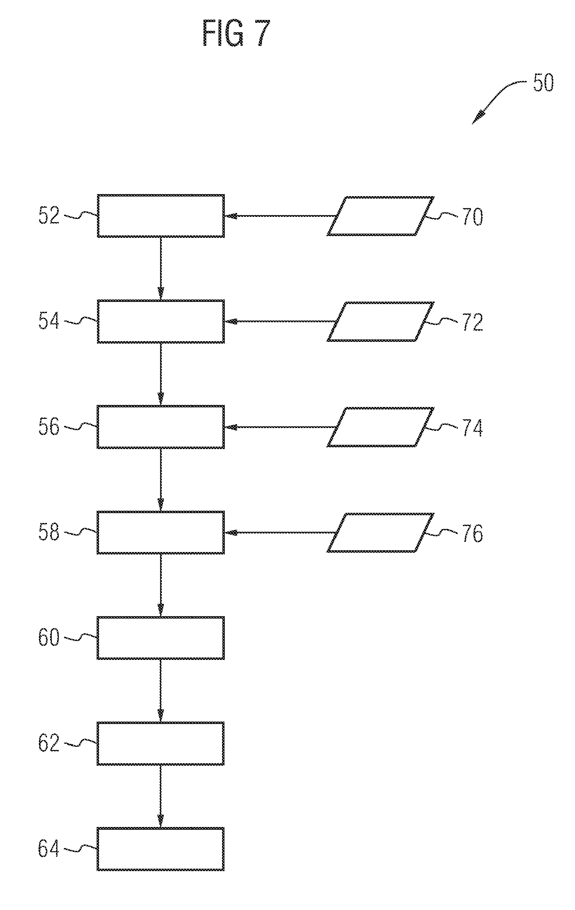

FIG 7 describes an exemplary method 50 for implementing the above-described GUI. The above-described GUI may be implemented by designing the drop-down control as a custom control adapted for handling various window messages generated by user clicks using its own window procedure, without depending on the operating system for the same. In the discussion that follows, it should be noted that depending on the type of input means provided, any user input event that involves clicking of a mouse button, pressing of a stylus, or tapping of a touch-screen on any window/control would lead to the generation of identical window messages by the operating system. These input events may thus be treated as equivalent and referred to simply as 'mouse-clicks'. For the same reason, releasing of a mouse button, stylus or the touch-screen may be generally referred to as 'mouse-release' events.

The method 50 begins at step 52 by displaying a drop-down page window upon a first user input 70 to activate the drop-down control. In order to reposition the drop-down page window to a new location, the user performs a mouse-click operation 72 at any portion on the client area of the drop-down page window. Consequently, at step 54, a first window message is generated for notification of this mouse-click event. For example in Windows^{™} operating system, this window message for notification of a mouse-click is referred to as WM_LBUTTONDOWN. The first window message is trapped by a window procedure of the drop-down page window and the window handle of the drop-down page window is sent to its parent window for reference.

After mouse-click on the client area, the next user input 74 involves a mouse-movement to the intended location of the drop-down page window. Consequently, at step 56, a second window message is generated for notification of the mouse-movement. For example in Windows^{™} operating system, this window message for notification of a mouse-movement is referred to as WM_MOUSEMOVE. The second window message is also trapped by the window procedure of the drop-down page window. Once the drop-down page window is dragged to the desired location, the next user input 76 involves mouse-release. At step 58, the corresponding window message for notification of this event is then trapped either by the window procedure of the drop-down page window or by a window procedure of any of the visible windows or controls. In Windows^{™} operating system, this window message for notification of a mouse-release is referred to as WM_LBUTTONUP. Upon generation of the window message for mouse-release notification, the coordinates of the point where the mouse-release occurred are noted. At step 60, the information about the coordinates is sent to the parent window of the drop-down control as a first user defined message. Next at step 62, the window procedure of the parent window of the drop-down control receives this information and passes the same to the opened drop-down page window as a second user defined message. Finally, at step 64, the second user defined message is received by the window procedure of the drop-down page window, after which the drop-down page window is repositioned to the new location defined by the coordinates noted above.

The coordinates of the new location of the drop-down page window may be further stored a persistent storage location such as an xml file or a registry. The new position of the drop-down page window can thus be retained and the drop-down page window can be displayed in the same location the next time a user click to activate the drop-down control.

By implementing controls/widgets in the above-described manner, it can be ensured that user does not make extra clicks to make choices within a screen. Using the present invention, the user as the liberty to reposition the drop down page wherever within the client area of the parent window, so that controls under this drop down page are not hidden anymore. This in turn improves the GUI navigation process for the user.

Summarizing, the above-described embodiments provide a system and method for providing a graphical user interface. The proposed system comprises means for generating a parent window containing a drop-down control. The proposed system also includes means for displaying a drop-down page window associated with said drop-down control at a first location in said parent window in response to a first user input. In accordance with the present invention, the proposed system further comprises means for repositioning said drop-down page window to a second location in said parent window in response to a second user input.

Although the invention has been described with reference to specific embodiments, this description is not meant to be construed in a limiting sense. Various modifications of the disclosed embodiments, as well as alternate embodiments of the invention, will become apparent to persons skilled in the art upon reference to the description of the invention. It is therefore contemplated that such modifications can be made without departing from the spirit or scope of the present invention as defined.

## Claims

1. A system (22) for providing a graphical user interface, comprising:
- means for generating a parent window (24) containing a drop-down control (27),
- means for displaying a drop-down page window (45) associated with said drop-down control (27) at a first location (44) in said parent window (24) in response to a first user input, and
- means for repositioning said drop-down page window (45) to a second location (46) in said parent window (24) in response to a second user input.

2. The system (22) according to claim 1, comprising means for storing coordinates of the second location (46) of said drop-down page window (45) in a persistent storage location external to said system (22).

3. The system (22) according to any of the preceding claims, wherein the drop-down page window (45) comprises a client area (42), and wherein the second user input comprises selecting a portion of the client area (42) and dragging said drop-down page window (45) to the second location (46).

4. The system (22) according to any of the preceding claims, wherein said means for repositioning the drop-down page window (45) further comprises:
- means for trapping a first window message by a window procedure of the drop-down page window (45), said first window message being generated for notification of a mouse-click on a client area (42) of the drop-down page window (45),
- means for trapping a second window message by the window procedure of the drop-down page window (45), said second window message being generated for notification of a mouse-movement subsequent to said mouse-click,
- means for trapping a third window message generated for notification of a mouse-release and noting the coordinates of the point where said mouse-release occurs, and
- means for communicating said coordinates to the window procedure of the drop-down page window (45) and displaying the drop-down page window (45) at the second location (46), said second location (46) being defined by said coordinates.

5. A method (50) for providing a graphical user interface, comprising:
- generating a parent window (24) comprising a drop-down control,
- displaying a drop-down page window (45) associated with said drop-down control (27) at a first location (44) in said parent window (24) upon selection of said drop-down control (27) by a first user input, and
- repositioning said drop-down page window (45) to a second location (46) in the parent window (24) in response to a second user input.

6. The method (50) according to claim 5, wherein the drop-down page window (45) comprises a client area (42), and wherein the second user input comprises selecting a portion of the client area (42) and dragging said drop-down page window (45) to the second location (46).

7. The method (50) according to any of claims 5 and 6, comprising storing the coordinates of the second location (46) in persistent storage location.

8. The method (50) according to any of claims 5-7, wherein repositioning said drop-down page window (45) to the second location (46) comprises:
- trapping a first window message by a window procedure of the drop-down page window (45), said first window message being generated for notification of a mouse-click on a client area (42) of the drop-down page window (45),
- trapping a second window message by the window procedure of the drop-down page window (45), said second window message being generated for notification of a mouse-movement subsequent to said mouse-click,
- trapping a third window message generated for notification of a mouse-release and noting the coordinates of the point where said mouse-release occurs, and
- communicating said coordinates to the window procedure of the drop-down page window (45) and displaying the drop-down page window (45) at the second location (46), said second location (46) being defined by said coordinates.
